# EUROPEAN PATENT APPLICATION

(11) **EP 4 848 044 A1**
(43) Date of publication of application: **02.12.2026**
(21) Application number: 25768480.3
(22) Date of filing: 20.01.2025
(51) Int. Cl.: G06F 3/03, H04N 9/31, G06F 3/01, G06F 3/04817, G06F 3/00

(54) **ELECTRONIC DEVICE AND CONTROL METHOD THEREFOR**

(30) Priority: 06.03.2024 KR 20240032061
(71) Applicant: Samsung Electronics Co., Ltd., Suwon-si, Gyeonggi-do 16677 (KR)
(72) Inventor: JEONG, Donghwa, Suwon-si, Gyeonggi-do 16677 (KR); KIM, Sehyun, Suwon-si, Gyeonggi-do 16677 (KR); LEE, Jongin, Suwon-si, Gyeonggi-do 16677 (KR); KIM, Donguk, Suwon-si, Gyeonggi-do 16677 (KR); KIM, Yeonwoo, Suwon-si, Gyeonggi-do 16677 (KR)
(74) Representative: Appleyard Lees IP LLP
(86) International application number: PCT/KR2025/001085
(87) International publication number: WO 2025/187955

(57) **Abstract**

This control method for an electronic device including a projection unit on one surface comprises the steps of: obtaining information about a first angle between a direction in which one surface of the electronic device faces and the ground; when the first angle satisfies a first condition, operating in a first state in which an image is projected on the floor by using the projection unit; and when a user input on the image projected on the floor is detected while operating in the first state, performing a function corresponding to the detected user input.

## Description

### Technical Field

The present disclosure relates to an electronic apparatus and a control method therefor, and more particularly, to an electronic apparatus in which a projection mode is changed according to a tilt change of the electronic apparatus, and a control method therefor.

### Background Art

A projector refers to an apparatus for projecting an image onto a projection surface. A projector may project an image onto various projection surfaces such as an indoor wall surface, an outdoor wall surface, a floor surface, and a ceiling in addition to a dedicated screen, and may thus be utilized in various ways.

### Disclosure of Invention

### Solution to Problem

According to an embodiment of the present disclosure, provided is a control method for an electronic apparatus including a projection unit on one surface, the method including: obtaining information about a first angle between a direction in which one surface of the electronic apparatus faces and the ground; operating in a first mode in which an image is projected onto a floor by using the projection unit when the first angle satisfies a first condition; and performing a function corresponding to a detected user input when the user input for the image projected onto the floor is detected while operating in the first mode.

The performing of the function corresponding to the detected user input when the user input for the image projected onto the floor is detected while operating in the first mode may include: projecting light toward the floor through a laser included in the one surface while operating in the first mode; and performing a function corresponding to an input position of the user input by detecting light reflected by a user body adjacent to the floor from the projected light through a camera included in the one surface.

The method may further include: changing a projection height of the light projected through the laser when the light projected through the laser is not reflected by the user body adjacent to the floor.

The method may further include: operating in a second mode in which the image is projected onto a wall surface by using the projection unit when the first angle satisfies a second condition.

The method may further include: changing the image projected onto the wall surface and projecting the changed image onto the floor when the first angle satisfies the first condition while operating in the second mode.

The performing of the function corresponding to the detected user input when the user input for the image projected onto the floor is detected while operating in the first mode may include: projecting information corresponding to a selected item when a user input for selecting one of a plurality of items included in the image is detected.

The method may further include: displaying detailed information for an activated item among a plurality of items included in the image while operating in the second mode.

The operating in the first mode in which the image is projected onto the floor by using the projection unit when the first angle satisfies the first condition may include: obtaining information about a second angle between a direction in which another surface adjacent to the one surface faces and the ground, projecting the image onto the floor at a first ratio where a width of the image is greater than a height of the image by using the projection unit when the second angle satisfies a third condition, and projecting the image onto the floor at a second ratio where a width of the image is less than a height of the image by using the projection unit when the second angle satisfies a fourth condition.

According to an embodiment of the present disclosure, provided is an electronic apparatus including: a main body; a projection unit included in one surface of the main body; a memory; and a processor, wherein the processor is configured to: obtain information about a first angle between a direction in which the one surface of the electronic apparatus faces and the ground; operate in a first mode in which an image is projected onto a floor by using the projection unit when the first angle satisfies a first condition; and perform a function corresponding to a detected user input when the user input for the image projected onto the floor is detected while operating in the first mode.

The apparatus may further include: a laser included in the one surface of the main body; and a camera included in the one surface of the main body, wherein the processor is configured to project light toward the floor through the laser while operating in the first mode, and perform a function corresponding to an input position of the user input by detecting light reflected by a user body adjacent to the floor from the projected light through the camera included in the one surface.

The processor may be configured to: change a projection height of the light projected through the laser when the light projected through the laser is not reflected by the user body adjacent to the floor.

The processor may be configured to: operate in a second mode in which the image is projected onto a wall surface by using the projection unit when the first angle satisfies a second condition.

The processor may be configured to: change the image projected onto the wall surface and project the changed image onto the floor when the first angle satisfies the first condition while operating in the second mode.

The processor may be configured to: project information corresponding to a selected item when a user input for selecting one of a plurality of items included in the image is detected.

The processor may be configured to: display detailed information for an activated item among a plurality of items included in the image while operating in the second mode.

The processor may be configured to: obtain information about a second angle between a direction in which another surface adjacent to the one surface faces and the ground, project the image onto the floor at a first ratio where a width of the image is greater than a height of the image by using the projection unit when the second angle satisfies a third condition, and project the image onto the floor at a second ratio where a width of the image is less than a height of the image by using the projection unit when the second angle satisfies a fourth condition.

According to an embodiment of the present disclosure, provided is a non-transitory computer-readable recording medium including a program for executing a control method for an electronic apparatus, wherein the method includes: obtaining information about a first angle between a direction in which one surface of the electronic apparatus faces and the ground; operating in a first mode in which an image is projected onto a floor by using the projection unit when the first angle satisfies a first condition; and performing a function corresponding to a detected user input when the user input for the image projected onto the floor is detected while operating in the first mode.

The performing of the function corresponding to the detected user input when the user input for the image projected onto the floor is detected while operating in the first mode may include: projecting light toward the floor through a laser included in the one surface while operating in the first mode; and performing a function corresponding to an input position of the user input by detecting light reflected by a user body adjacent to the floor from the projected light through a camera included in the one surface.

The method may further include: changing a projection height of the light projected through the laser when the light projected through the laser is not reflected by the user body adjacent to the floor.

The method may further include: operating in a second mode in which the image is projected onto a wall surface by using the projection unit when the first angle satisfies a second condition.

### Brief Description of Drawings

FIG. 1 is a perspective view illustrating an appearance of an electronic apparatus according to at least one embodiment of the present disclosure.
FIG. 2 is a block diagram illustrating a configuration of the electronic apparatus according to at least one embodiment of the present disclosure.
FIG. 3 is a flowchart illustrating a method in which the electronic apparatus operates based on a tilt of the electronic apparatus according to at least one embodiment of the present disclosure.
FIG. 4 is a view illustrating a method in which the electronic apparatus projects an image onto a floor according to at least one embodiment of the present disclosure.
FIG. 5 is a view illustrating a method in which the electronic apparatus projects an image onto a wall surface according to at least one embodiment of the present disclosure.
FIG. 6 is a view illustrating a method in which the electronic apparatus detects a user touch input according to at least one embodiment of the present disclosure.
FIG. 7 is a view illustrating a case in which the electronic apparatus does not detect a user touch input according to at least one embodiment of the present disclosure.
FIG. 8 is a flowchart illustrating a method in which the electronic apparatus detects a user touch input by changing a projection height or a projection angle of a laser according to at least one embodiment of the present disclosure.
FIG. 9 is a flowchart illustrating a method in which the electronic apparatus detects a user touch input by changing a projection height of a laser according to at least one embodiment of the present disclosure.
FIG. 10 is a flowchart illustrating a method in which the electronic apparatus detects a user touch input by changing a projection angle of a laser according to at least one embodiment of the present disclosure.
FIG. 11 is a flowchart illustrating a method in which the electronic apparatus projects an image according to a tilt change of the electronic apparatus according to at least one embodiment of the present disclosure.
FIG. 12 is a flowchart illustrating a method in which the electronic apparatus controls an operating mode of the electronic apparatus according to a tilt change of the electronic apparatus according to at least one embodiment of the present disclosure.
FIGS. 13 and 14 are views illustrating a method in which the electronic apparatus projects an image according to at least one embodiment of the present disclosure.
FIG. 15 is a flowchart illustrating a method in which the electronic apparatus controls an operating mode of the electronic apparatus according to a tilt change of the electronic apparatus according to at least one embodiment of the present disclosure.
FIG. 16 is a view illustrating a control method for the electronic apparatus according to at least one embodiment of the present disclosure.

### Mode for Invention

The present disclosure may be variously modified and may have various embodiments, and specific embodiments of the present disclosure are thus illustrated in the accompanying drawings and described in detail in the detailed description. However, it should be understood that the scope of the present disclosure is not limited to specific embodiments, and include various modifications, equivalents, and/or alternatives according to embodiments of the present disclosure. Throughout the drawings, similar components are denoted by similar reference numerals.

In describing the present disclosure, omitted is a detailed description of a case where it is decided that a detailed description of the known functions or configurations related to the present disclosure may unnecessarily obscure the gist of the present disclosure.

In addition, the following embodiment may be modified in several different forms, and the scope and spirit of the present disclosure are not limited to the following embodiments. Rather, these embodiments make the present disclosure thorough and complete, and are provided to completely convey the spirit of the present disclosure to those skilled in the art.

Terms used in the present disclosure are used only to describe specific embodiments and are not intended to limit the scope of the present disclosure. Singular expressions may include plural expressions unless the context clearly indicates otherwise.

In the present disclosure, the expression such as "have," "may have," "include," or "may include," indicates the presence of a corresponding feature (e.g., a numerical value, a function, an operation, or a component such as a part), and does not exclude the presence of an additional feature.

In the present disclosure, expressions such as "A or B," "at least one of A or/and B," or "one or more of A or/and B" may include all possible combinations of items enumerated together. For example, "A or B," "at least one of A and B," or "at least one of A or B" may indicate all of (1) including at least one A, (2) including at least one B, or (3) including both at least one A and at least one B.

In the present disclosure, expressions such as "first," "second," "firstly," or "secondly" may modify various components regardless of order and/or importance, and are used only to distinguish one component from another component, and do not limit the corresponding components.

When it is described that a component (e.g., a first component) is "(operatively or communicatively) coupled with/to" or "connected to" another component (e.g., a second component), it should be understood that the component may be directly connected to the other component or may be connected through another component (e.g., a third component).

On the other hand, when it is described that a component (e.g., a first component) is "directly connected to" or "directly coupled to" another component (e.g., a second component), it may be understood that no other component (e.g., a third component) is present between the component and the other component.

In the present disclosure, an expression "configured to (or set to)" may be replaced with, for example, "suitable for," "having the capacity to," "designed to," "adapted to," "made to," or "capable of," depending on a context. The term "configured to (or set to)" may not necessarily refer to only "specifically designed to" in terms of hardware.

Instead, in some contexts, an expression "a device configured to" may refer to a device capable of "performing" a corresponding function in combination with another device or component. For example, a phrase "a processor configured to (or set to) perform A, B, and C" may refer to a dedicated processor capable of performing the corresponding operation, or a generic-purpose processor 160 (e.g., a central processing unit (CPU) or an application processor) capable of performing the operation by executing one or more software programs stored in a memory device.

In an embodiment, a "module" or a "unit" may perform at least one function or operation, and may be implemented as hardware, software, or a combination of hardware and software. In addition, a plurality of "modules" or a plurality of "units" may be integrated into at least one module and implemented by at least one processor, except for a "module" or a "unit" that needs to be implemented in specific hardware.

Meanwhile, various elements and regions in the drawings are schematically illustrated. Accordingly, the spirit of the present disclosure is not limited by relative sizes or intervals illustrated in the accompanying drawings.

Hereinafter, embodiments of the present disclosure will be described in detail with reference to the accompanying drawings to allow those skilled in the art to which the present disclosure pertains to easily implement the present disclosure.

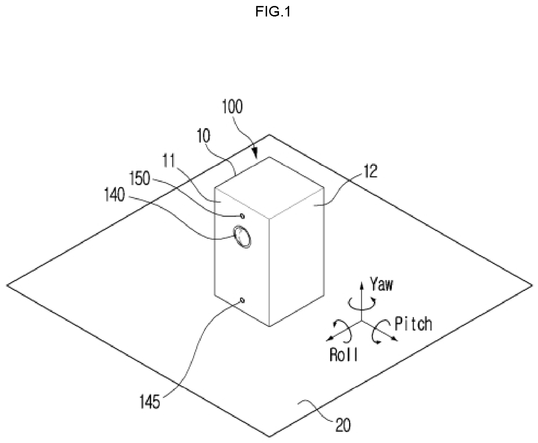

FIG. 1 is a perspective view illustrating an appearance of an electronic apparatus according to at least one embodiment of the present disclosure.

Referring to FIG. 1, an electronic apparatus 100 may include a main body 10.

The main body 10 is a component for forming an appearance of the electronic apparatus 100. Although FIG. 1 illustrates a state in which the main body 10 is implemented to have a rectangular parallelepiped shape, the present disclosure is not limited thereto, and the main body 10 may be implemented to have various shapes such as a cylindrical shape, a spherical shape, or a disk shape.

One surface 11 of the main body 10 may include a projection unit 140. The projection unit 140 is a component for projecting an image to the outside. The projection unit 140 of the present disclosure may project an image onto a wall surface or a floor surface.

One surface 11 of the main body 10 may include a laser 145. The laser 145 is a component for projecting light to the outside. The laser of the present disclosure may project light in a direction corresponding to a projection surface on which the projection unit 140 projects an image. The laser 145 of the present disclosure may be an infrared laser capable of projecting infrared light, and is not limited thereto.

One surface 11 of the main body 10 may include a camera 150. The camera 150 is a component for capturing an external environment of the electronic apparatus 100. The camera 150 of the present disclosure may capture an external environment in a direction corresponding to a projection surface on which the projection unit 140 projects an image. The camera 150 of the present disclosure may detect light reflected by an external object from light projected by the laser. The camera 150 of the present disclosure may be an infrared camera capable of detecting infrared light, and is not limited thereto.

According to at least one embodiment of the present disclosure, at least one of the projection unit 140, the laser 145, or the camera 150 may be included inside the main body 10. In this case, at least one of a component of the projection unit 140 for projecting an image to the outside, a component of the laser 145 for projecting light to the outside, or a component of the camera 150 for capturing an external image may be exposed through an opening formed in one surface of the main body 10.

According to at least one embodiment of the present disclosure, at least one of the projection unit 140, the laser 145, or the camera 150 may be attached or fixed to an outside of the main body 10. In this case, at least one of the projection unit 140, the laser 145, or the camera 150 may be fixed to one surface 11 of the main body 10 by a fastening means such as a bolt, or may be inserted into and fixed to a groove provided in one surface 11 of the main body 10. Alternatively, at least one of the projection unit 140, the laser 145, or the camera 150 may be attached to one surface of the main body 10 by a magnetic material or a bonding material.

In the present disclosure, the electronic apparatus 100 may have a pitch angle, a roll angle, or a yaw angle changed according to a state in which the main body 10 is placed on a ground 20.

In the present disclosure, the pitch angle, the roll angle, and the yaw angle may indicate angles rotated with respect to a pitch axis, a roll axis, and a yaw axis, respectively.

In the present disclosure, the pitch angle may indicate an angle between one surface 11 of the main body 10 including the projection unit 140 and the ground 20.

In other words, the pitch angle may indicate an angle by which the main body 10 is rotated based on a normal axis of another surface 12 adjacent to one surface 11 of the main body 10 including the projection unit 140.

In the present disclosure, the roll angle may indicate an angle between the ground 20 and another surface 12 adjacent to one surface 11 of the main body 10.

In other words, the roll angle may indicate an angle by which the main body 10 is rotated based on a normal axis of one surface 11 of the main body 10.

In this case, the pitch angle, the roll angle, or the yaw angle of the main body 10 may change according to a manner in which a user places the main body 10 on the ground 20.

Meanwhile, although not illustrated in the drawings, the main body 10 may be supported by a support for fixing the main body 10, and the support may be placed on the ground. The support may be detachably coupled to the main body, and is not limited thereto.

The support may include a hinge portion for rotating the main body 10. Here, the main body 10 may be rotated by a motor included in the support. The support may obtain a user input for rotating the main body 10. In addition, the support may rotate the main body 10 at an angle corresponding to the user input.

Alternatively, the electronic apparatus 100 may include a motor for rotating the main body 10. Here, the main body 10 may be rotated by a motor included in the electronic apparatus 100. The electronic apparatus 100 may obtain a user input for rotating the main body 10.

Accordingly, the electronic apparatus 100 may rotate the main body 10, and accordingly, the pitch angle, the roll angle, or the yaw angle of the main body 10 may change.

Specifically, when a user input for rotating the main body 10 is detected, the electronic apparatus 100 may rotate the main body 10 by using the motor. Specifically, when a user input for operating the electronic apparatus 100 in a specific operating mode is detected, the electronic apparatus 100 may rotate the main body 10 at an angle corresponding to the specific operating mode.

In the present disclosure, the term "state" may be replaced with a term of the same or a similar concept, such as "mode," "scheme," "method," or "setting."

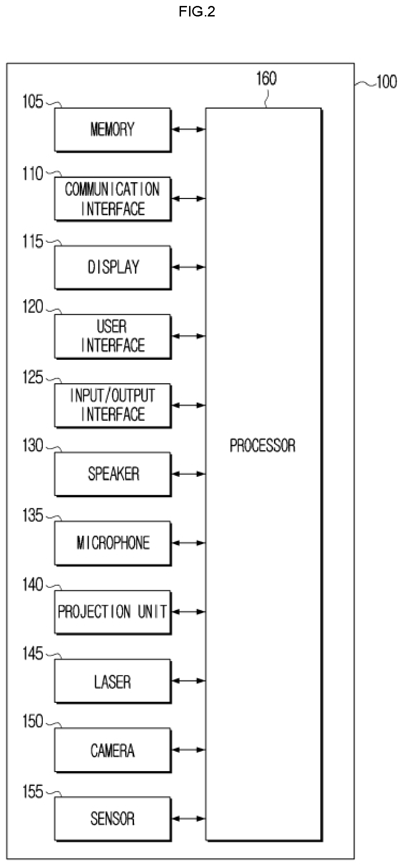

FIG. 2 is a block diagram illustrating a configuration of the electronic apparatus 100 according to at least one embodiment of the present disclosure.

Referring to FIG. 2, the electronic apparatus 100 may include at least one of a memory 105, a communication interface 110, a display 115, a user interface 120, an input/output interface 125, a speaker 130, a microphone 135, the projection unit 140, the laser 145, the camera 150, a sensor 155, or a processor 160. The electronic apparatus 100 may further include another component in addition to the above components, and at least one of the above components may be omitted.

The electronic apparatus 100 may be implemented as a projector, and may be implemented in various forms such as a floor-mounted projector, a mobile projector, or a ceiling-mounted projector.

The memory 105 may store at least one instruction related to the electronic apparatus 100. The memory 105 may store an operating system (O/S) for driving the electronic apparatus 100. In addition, the memory 105 may store various software programs or applications for operating the electronic apparatus 100 according to various embodiments of the present disclosure. In addition, the memory 105 may include a semiconductor memory such as a flash memory 105, or a magnetic storage medium such as a hard disk.

Specifically, the memory 105 may store various software modules for operating the electronic apparatus 100 according to various embodiments of the present disclosure, and the processor 160 may control an operation of the electronic apparatus 100 by executing various software modules stored in the memory 105. That is, the memory 105 may be accessed by the processor 160, and the processor 160 may perform reading, writing, modification, deletion, updating, or the like of data.

Meanwhile, in the present disclosure, the term "memory 105" may be used to include the memory 105, a read only memory (ROM) (not shown) in the processor 160, a random access memory (RAM) (not shown), or a memory card (not shown) mounted on the electronic apparatus 100 (e.g., a micro secure digital (SD) card or a memory stick).

According to at least one embodiment of the present disclosure, the memory 105 may store a neural network model for detecting a user hand from an image obtained through the camera 150. Alternatively, the memory 105 may store a neural network model for detecting whether a user touches a floor surface from an image obtained through the camera 150. In the present disclosure, the term "user hand" may be replaced with a term "user finger."

According to at least one embodiment of the present disclosure, the memory 105 may store information about a pitch angle or a roll angle for the electronic apparatus 100 to determine an operating mode. For example, the memory 105 may store information about a condition of a pitch angle for the electronic apparatus 100 to operate in a first mode in which an image is projected onto a floor. In addition, the memory 105 may store information about a condition of a pitch angle for the electronic apparatus to operate in a second mode in which an image is projected onto a wall surface.

In addition, the communication interface 110 may include circuitry, and may be a component for communicating with an external device and a server. The communication interface 110 may perform communication with an external device or a server based on a wired or wireless communication scheme. The communication interface 110 may include a Bluetooth module (not shown), a wireless fidelity (Wi-Fi) module (not shown), an infrared (IR) module, a local area network (LAN) module, an Ethernet module, or the like. Here, each communication module may be implemented in a form of at least one hardware chip. In addition to the above-described communication scheme, the wireless communication module may include at least one communication chip for performing communication according to various wireless communication standards such as ZigBee, universal serial bus (USB), mobile industry processor interface camera serial interface (MIPI CSI), third generation (3G), third generation partnership project (3GPP), long term evolution (LTE), LTE Advanced (LTE-A), fourth generation (4G), or fifth generation (5G). However, the above-described configuration is merely an embodiment, and the communication interface 110 may use at least one communication module among various communication modules.

According to at least one embodiment of the present disclosure, the communication interface 110 may receive information for controlling an operation of the electronic apparatus 100 from an external device. For example, the communication interface 110 may receive a user input for an image being projected by the projection unit 140 from an external device.

The display 115 may be implemented as various types of displays such as a liquid crystal display (LCD), an organic light emitting diode (OLED) display, or a plasma display panel (PDP). The display 115 may also include a driving circuit, a backlight unit, or the like, which may be implemented in a form such as an amorphous silicon thin film transistor (a-Si TFT), a low temperature poly silicon thin film transistor (LTPS TFT), or an organic thin film transistor (OTFT). Meanwhile, the display 115 may be implemented as a touch screen combined with a touch sensor, the flexible display 115, the three-dimensional (3D) display 115, or the like. In addition, according to an embodiment of the present disclosure, the display 115 may include not only a display panel for outputting an image, and also a bezel for housing the display panel. In particular, according to an embodiment of the present disclosure, the bezel may include the touch sensor 155 for detecting user interaction.

According to at least one embodiment of the present disclosure, the display 115 may display information for guiding a user to change a position where the main body 10 of the electronic apparatus 100 is placed or a state in which the main body 10 is placed on the ground.

According to at least one embodiment of the present disclosure, the display 115 may display information about an operating mode of the electronic apparatus 100.

According to various embodiments, the electronic apparatus 100 may not include the display 115. The electronic apparatus 100 may be connected to an external display device, and may transmit an image or content stored in the electronic apparatus 100 to the external display device. Specifically, the electronic apparatus 100 may transmit an image or content to the external display device together with a control signal for controlling the image or content to be displayed on the external display device. Here, the external display device may be connected to the electronic apparatus 100 through the communication interface 110 or the input/output interface 125. For example, the electronic apparatus 100 may not include a display, like a set-top box (STB). In addition, the electronic apparatus 100 may include only a small display capable of displaying only simple information such as text information. Here, the electronic apparatus 100 may transmit an image or content to the external display device in a wired or wireless manner through the communication interface 110, or may transmit the image or content to the external display device through the input/output interface 125.

The user interface 120 may be implemented as a device such as a button, a touch pad, a mouse, or a keyboard, or may be implemented as a touch screen capable of performing the above-described display function and manipulation input function together. Here, the button may be various types of buttons such as a mechanical button, a touch pad, and a wheel formed in any region such as a front portion, a side portion, or a rear portion of an appearance of the main body of the electronic apparatus 100.

The input/output interface 125 may be any one interface among a high definition multimedia interface (HDMI), a mobile high-definition link (MHL), a universal serial bus (USB), a display port (DP), Thunderbolt, a video graphics array (VGA) port, a red-green-blue (RGB) port, D-subminiature (D-SUB), and a digital visual interface (DVI). The input/output interface 125 may input/output at least one of an audio signal or a video signal. According to an implementation example, the input/output interface 125 may include a port for inputting/outputting only an audio signal and a port for inputting/outputting only a video signal as separate ports, or may be implemented as one port for inputting/outputting both an audio signal and a video signal. Meanwhile, the electronic apparatus 100 may transmit at least one of an audio signal or a video signal to an external device (e.g., an external display device or an external speaker) through the input/output interface 125. Specifically, an output port included in the input/output interface 125 may be connected to an external device, and the electronic apparatus 100 may transmit at least one of an audio signal or a video signal to the external device through the output port.

Here, the input/output interface 125 may be connected to the communication interface 110. The input/output interface 125 may transmit information received from an external device to the communication interface 110 or may transmit information received through the communication interface 110 to the external device.

The speaker 130 is a component for outputting an audio signal. In particular, the speaker 130 may include an audio output mixer, an audio signal processor, or an acoustic output module. The audio output mixer may synthesize a plurality of audio signals to be output into at least one audio signal. For example, the audio output mixer may synthesize an analog audio signal and another analog audio signal (e.g., an analog audio signal received from the outside) into at least one analog audio signal. The acoustic output module may include a speaker or an output terminal. According to various embodiments, the acoustic output module may include a plurality of speakers, and in this case, the acoustic output module may be disposed inside the main body, and sound radiated while covering at least a part of a diaphragm of the acoustic output module may pass through a waveguide and may be transmitted to the outside of the main body. The acoustic output module may include a plurality of acoustic output units, and the plurality of acoustic output units may be symmetrically disposed on the appearance of the main body, thereby radiating sound in all directions, that is, in 360-degree directions. In addition, the speaker 130 may be a component for outputting various audio data as well as various notification sounds or voice messages.

According to at least one embodiment of the present disclosure, the speaker 130 may output audio for guiding a user to change a position where the main body 10 of the electronic apparatus 100 is placed or a state in which the main body 10 is placed on the ground.

The microphone 135 is a component for receiving a user voice or another sound and converting the user voice or the other sound into audio data. The microphone 135 may receive a user voice in an activated state. For example, the microphone 135 may be integrally formed on an upper surface, a front surface, a side surface, or the like of the electronic apparatus 100. The microphone 135 may include various configurations such as a microphone for collecting an analog user voice, an amplifier circuit for amplifying the collected user voice, an analog-to-digital (A/D) conversion circuit for sampling the amplified user voice and converting the sampled user voice into a digital signal, and a filter circuit for removing a noise component from the converted digital signal.

In addition, the electronic apparatus 100 may obtain a user voice through the microphone 135 included in the electronic apparatus 100. Alternatively, the electronic apparatus 100 may obtain a user voice from an external device including a microphone. Specifically, the microphone may be provided in a separate external device such as a remote controller, a smartphone, or a speaker for transmitting a signal to the electronic apparatus 100. Here, the microphone provided in the external device may digitize an analog voice signal, and the electronic apparatus 100 may perform communication connection with the external device through the communication interface 110 and receive the digitized voice signal.

Here, a remote control application may be installed in the external device. In addition, the external device may control the electronic apparatus 100 through the remote control application and may perform a user voice recognition function. Here, the external device may perform communication with the electronic apparatus 100 and a server through a plurality of communication interfaces.

In addition, the external device in which the remote control application is installed may be a smartphone. However, the above-described configuration is merely an embodiment, and the external device may be implemented through various devices in which an application may be installed, such as an artificial intelligence (AI) speaker.

In addition, the electronic apparatus 100 may be connected to the external device through the communication interface 110 or the input/output interface 125 in a wired/wireless manner, and the electronic apparatus 100 may receive an audio signal for a user voice from the external device.

According to at least one embodiment of the present disclosure, the electronic apparatus 100 may obtain a user voice for switching an operating mode of the electronic apparatus 100 or an input mode of the electronic apparatus 100 through the microphone 135 or an external device.

The projection unit 140 is a component for projecting an image to the outside. According to various embodiments of the present disclosure, the projection unit 140 may be implemented using various projection schemes (e.g., a cathode-ray tube (CRT) scheme, a liquid crystal display (LCD) scheme, a digital light processing (DLP) scheme, or a laser scheme).

Meanwhile, the projection unit 140 may include various types of light sources. For example, the projection unit 140 may include at least one light source among a lamp, a light emitting diode (LED), and a laser.

The projection unit 140 may output an image at an aspect ratio of 4:3, an aspect ratio of 5:4, or a wide aspect ratio of 16:9 according to a use of the projector 100 or a user setting, and may output an image at various resolutions such as wide video graphics array (WVGA, 854*480), super video graphics array (SVGA, 800*600), extended graphics array (XGA, 1024*768), wide extended graphics array (WXGA, 1280*720), WXGA (1280*800), super extended graphics array (SXGA, 1280*1024), ultra extended graphics array (UXGA) (1600*1200), full high definition (Full HD) (1920*1080), or ultra high definition (UHD) (3840*2160) according to the aspect ratio.

The projection unit 140 may perform various functions for adjusting an output image under control of the processor 160. For example, the projection unit 140 may perform functions such as a zoom function, a keystone function, a quick corner (four-corner) keystone function, or a lens shift function.

Specifically, the projection unit 140 may perform a zoom function for enlarging or reducing an image according to a distance from a screen (projection distance).

A method of performing the zoom function may be divided into a hardware scheme of adjusting a screen size by moving a lens and a software scheme of adjusting a screen size by cropping an image. When the zoom function is performed, focus adjustment of an image is required. Focus adjustment may be performed by a manual focus scheme or a motor-driven scheme. The manual focus scheme indicates a scheme of manually adjusting a focus. The motor-driven scheme indicates a scheme of automatically adjusting a focus by using a motor. The electronic apparatus 100 may selectively provide a digital zoom function or an optical zoom function.

The projection unit 140 may also perform a keystone correction function. When a height does not match during front projection, a screen may be distorted upward or downward. The keystone correction function indicates a function of correcting a distorted screen. For example, when distortion occurs in a left-right direction of a screen, the distortion may be corrected by using a horizontal keystone, and when distortion occurs in an up-down direction, the distortion may be corrected by using a vertical keystone. A quick corner (four-corner) keystone correction function indicates a function of correcting a screen when a central region of the screen is normal and a corner region thereof is not balanced. A lens shift function indicates a function of moving a screen as it is when the screen is out of the screen.

The projection unit 140 may automatically provide zoom/keystone/focus functions by analyzing a surrounding environment and a projection environment, even without user manipulation. Specifically, the projection unit 140 may automatically provide the zoom/keystone/focus functions based on a distance between the projector 100 and a screen (e.g., a wall surface or a floor surface) detected by the sensor 155, information about a space in which the projector 100 is currently positioned, information about surrounding light amounts, or the like.

In addition, the projection unit 140 may provide an illumination function by using a light source. In particular, the projection unit 140 may output light by using one or more light sources such as LEDs.

The projection unit 140 may also output a light source by using a surface-emitting LED according to an implementation example. The surface-emitting LED is an LED having an optical sheet disposed above the LED to allow light to be uniformly distributed and output.

The projection unit 140 may also provide a user with a dimming function for adjusting intensity of a light source. Specifically, when a user inputs a command for adjusting the intensity of a light source through various manipulation interfaces such as a touch screen, a button, and a dial, the projection unit 140 may control an LED to output light at intensity corresponding to the user command. Alternatively, the projection unit 140 may provide the dimming function based on content analyzed by the processor 160 without a user input. Specifically, the projection unit 140 may control the LED to output the light source at an intensity based on information about currently provided content (e.g., content type or content brightness).

The projection unit 140 may also control a color temperature under control of the processor 160.

The laser 145 is a component for projecting light to the outside. The camera 150 is a component for capturing an image. The laser 145 and the camera 150 are described with reference to FIG. 1, and overlapping descriptions will thus be omitted.

The sensor 155 is a component for detecting a tilt change of the electronic apparatus. The sensor 155 may detect a pitch angle change, a roll angle change, or a yaw angle change of the electronic apparatus 100. The sensor 155 may be implemented as a tilt detection sensor, a motion sensor, an acceleration sensor, a gyro sensor, or the like, and is not limited thereto.

The processor 160 may control overall operations and functions of the electronic apparatus 100. Specifically, the processor 160 may be connected to a configuration of the electronic apparatus 100 including the memory 105, and may generally control an operation of the electronic apparatus 100 by executing at least one instruction stored in the memory 105 as described above.

The processor 160 may be implemented in various schemes. For example, the processor 160 may be implemented as at least one of an application specific integrated circuit (ASIC), a logic integrated circuit, an embedded processor, a micom, a microprocessor, hardware control logic, a hardware finite state machine (FSM), or the digital signal processor 160.

In particular, the processor 160 may include at least one processor. Specifically, at least one processor may include at least one of a central processing unit (CPU), a graphics processing unit (GPU), an accelerated processing unit (APU), many integrated core (MIC), a digital signal processor (DSP), a neural processing unit (NPU), a main processing unit (MPU), a hardware accelerator, or a machine learning accelerator. At least one processor may control one or any combination among other components of the electronic apparatus, and may perform an operation or data processing related to communication. At least one processor may execute at least one program or instruction stored in the memory. For example, at least one processor may perform a method according to an embodiment of the present disclosure by executing at least one instruction stored in the memory.

When the method according to at least one embodiment of the present disclosure includes a plurality of operations, the plurality of operations may be performed by one processor or may be performed by a plurality of processors. That is, when a first operation, a second operation, and a third operation are performed using the method according to at least one embodiment, all of the first operation, the second operation, and the third operation may be performed by a first processor, or the first operation and the second operation may be performed by the first processor 160 and the third operation may be performed by the second processor 160.

At least one processor may be implemented as the single-core processor 160 including one core, or may be implemented as one or more multi-core processors 160 including a plurality of cores (e.g., homogeneous multi-cores or heterogeneous multi-cores). When at least one processor is implemented as a multi-core processor, each of a plurality of cores included in the multi-core processor may include a processor internal memory such as a cache memory or an on-chip memory, and a common cache shared by the plurality of cores may be included in the multi-core processor. In addition, each of the plurality of cores included in the multi-core processor (or some of the plurality of cores) may independently read and perform program instructions for implementing the method according to at least one embodiment of the present disclosure, or all (or some) of the plurality of cores may be linked and may read and perform program instructions for implementing the method according to at least one embodiment of the present disclosure.

When the method according to at least one embodiment of the present disclosure includes a plurality of operations, the plurality of operations may be performed by one core among a plurality of cores included in the multi-core processor, or may be performed by the plurality of cores. For example, when a first operation, a second operation, and a third operation are performed by the method according to at least one embodiment, all of the first operation, the second operation, and the third operation may be performed by a first core included in the multi-core processor, or the first operation and the second operation may be performed by the first core included in the multi-core processor and the third operation may be performed by a second core included in the multi-core processor.

In embodiments of the present disclosure, the processor 160 may indicate a system on chip (SoC) in which at least one processor and other electronic components are integrated, a single-core processor, a multi-core processor, or a core included in a single-core processor or a multi-core processor. Here, the core may be implemented as a CPU, a GPU, an APU, an MIC, a DSP, an NPU, a hardware accelerator, a machine learning accelerator, or the like, and embodiments of the present disclosure are not limited thereto.

An operation of the processor 160 for implementing various embodiments of the present disclosure may be implemented using a plurality of modules.

Specifically, data for a plurality of modules according to the present disclosure may be stored in the memory 105, and the processor 160 may access the memory 105, load the data for the plurality of modules into a memory or a buffer inside the processor 160, and then implement various embodiments according to the present disclosure by using the plurality of modules.

However, at least one of the plurality of modules according to the present disclosure may be implemented as hardware and may be included in the processor 160 in a form of a system on chip.

Alternatively, at least one of the plurality of modules according to the present disclosure may be implemented as a separate external device, and the electronic apparatus 100 and each module may perform communication and may perform an operation according to the present disclosure.

According to at least one embodiment of the present disclosure, the processor 160 may control an operation of the electronic apparatus 100 described below with reference to the drawings. Here, the processor 160 may control at least one of components of the electronic apparatus 100 to allow the electronic apparatus 100 to perform each operation.

Hereinafter, an operation of the electronic apparatus 100 according to the present disclosure will be described in detail with reference to the accompanying drawings.

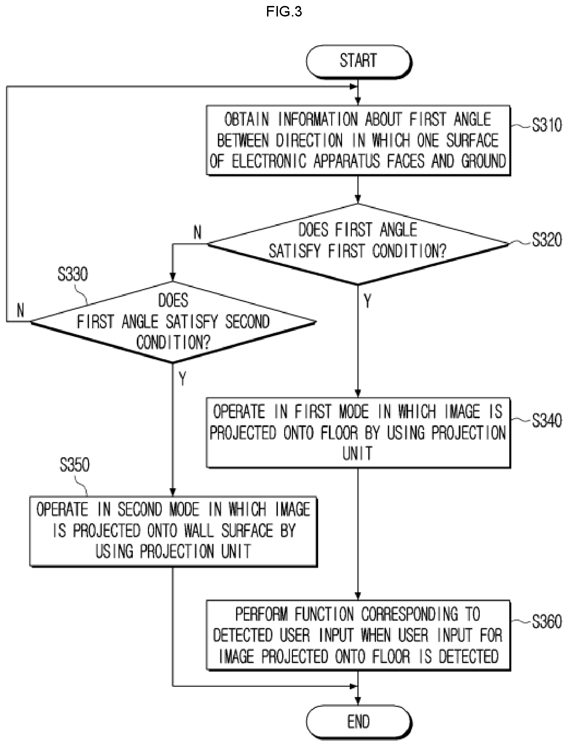

FIG. 3 is a flowchart illustrating a method in which the electronic apparatus 100 operates based on a tilt of the electronic apparatus 100 according to at least one embodiment of the present disclosure.

Referring to FIG. 3, the electronic apparatus 100 may obtain information about a first angle between a direction in which one surface of the electronic apparatus 100 faces and the ground (S310). Here, one surface may be one surface of the main body 10 including the projection unit 140.

Here, the electronic apparatus 100 may sense information about an angle between a direction in which one surface of the electronic apparatus 100 faces and the ground (a pitch angle of the electronic apparatus 100) through the sensor 155.

In the present disclosure, when one surface of the electronic apparatus 100 faces a wall surface, an angle between a direction in which one surface of the electronic apparatus 100 faces and the ground may be 90 degrees.

In addition, when one surface of the electronic apparatus 100 faces a ceiling, an angle between a direction in which one surface of the electronic apparatus 100 faces and the ground may be 180 degrees.

In addition, when the electronic apparatus 100 is fixed to a ceiling and one surface of the electronic apparatus 100 faces a floor surface, an angle between a direction in which one surface of the electronic apparatus 100 faces and the ground may be 0 degrees.

The electronic apparatus 100 may identify whether the first angle satisfies a first condition (S320).

Here, the first condition may be a condition in which the first angle is a specific angle. For example, the first condition may be a condition in which the first angle is 90 degrees or 0 degrees.

Alternatively, the first condition may be a condition in which the first angle falls within a specific angle range. For example, the first condition may be a condition in which the detected angle falls within "80 degrees to 110 degrees" or falls within "-10 degrees to 10 degrees."

When the first angle satisfies the first condition (S320-Y), the electronic apparatus 100 may operate in a first mode in which an image is projected onto the floor by using the projection unit 140 (S340).

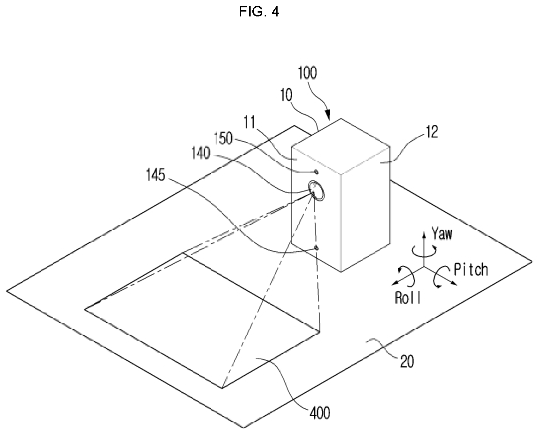

For example, when the electronic apparatus 100 is placed on the ground 20 as illustrated in FIG. 4, the detected first angle may be 90 degrees. In addition, the first condition may be a condition in which the first angle is 90 degrees. Here, referring to FIG. 4, the electronic apparatus 100 may project an image 400 onto the floor by using the projection unit 140.

The electronic apparatus 100 may identify whether the first angle satisfies a second condition (S330).

When the first angle does not satisfy the first condition (S320-N) and the first angle satisfies the second condition (S330-Y), the electronic apparatus 100 may operate in a second mode in which an image is projected onto a wall surface by using the projection unit 140 (S350).

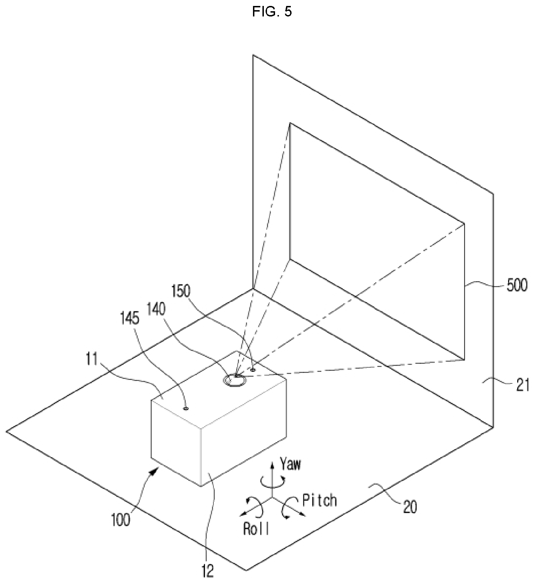

For example, when the electronic apparatus 100 is placed on the ground as illustrated in FIG. 5, the detected second angle may be 180 degrees. In addition, the second condition may be a condition in which the first angle is 180 degrees. Here, referring to FIG. 5, the electronic apparatus 100 may project an image 500 onto a wall surface 21 by using the projection unit 140.

Meanwhile, when the first angle does not satisfy the first condition (S320-N) and the first angle does not satisfy the second condition (S330-N), the electronic apparatus 100 may re-obtain information about the first angle (S310).

Meanwhile, when a user input for the image projected onto the floor is detected while operating in the first mode in S340, the electronic apparatus 100 may perform a function corresponding to the detected user input (S360).

Specifically, the electronic apparatus 100 may detect a user input for the image projected onto the floor while operating in the first mode.

Here, the user input for the projected image may be a user touch input in which a user touches one point of the image projected onto the floor, and is not limited thereto. The user input for the projected image may be received from an external device or obtained through the user interface 120.

In the present disclosure, the electronic apparatus 100 may operate in a first input mode in which a user input is obtained through a user touch input. Alternatively, the electronic apparatus 100 may operate in a second input mode in which a user input is obtained through an external device or the user interface 120.

The electronic apparatus 100 may obtain information about input coordinates of a user touch input by using the laser 145 and the camera 150.

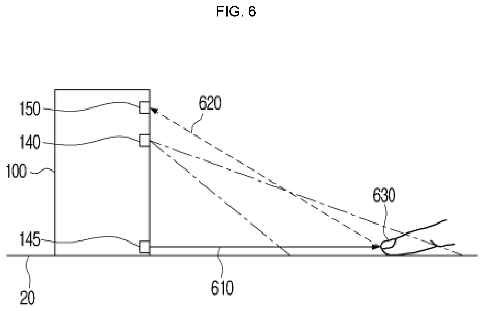

Referring to FIG. 6, the electronic apparatus 100 may project light 610 toward a floor surface through the laser 145 while operating in the first mode. Here, the electronic apparatus 100 may project the light 610 toward the floor surface on which an image is being projected. In addition, the electronic apparatus 100 may project the light 610 parallel to the floor surface.

In addition, the electronic apparatus 100 may perform a function corresponding to a user input position by detecting light 620 reflected by a user hand 630 from light projected through the camera 150 included in one surface of the main body 10.

Specifically, the light 610 projected by the laser 145 may be reflected by the user hand 630. The light 630 reflected by the user hand 630 may be detected through the camera 150. Accordingly, the electronic apparatus 100 may identify a point at which the light 610 projected by the laser 145 is reflected as a point touched by the user hand 630.

Here, the electronic apparatus 100 may identify coordinates of a point touched by the user. Here, the coordinates may indicate xy coordinates of a point touched by the user in the projected image.

When the coordinates of the point touched by the user are identified, the electronic apparatus 100 may perform a function corresponding to the coordinates. That is, the electronic apparatus 100 may perform a function corresponding to the user input position.

For example, the electronic apparatus 100 may project a screen including a plurality of items. Here, the projected image may include a user interface (UI) for selecting one of the plurality of items.

While projecting an image, when a user input for selecting a point at which one item among the plurality of items is positioned is detected, the electronic apparatus 100 may project an image for detailed information of the selected item. For example, when the selected item is content, the electronic apparatus 100 may project a content playback image.

Meanwhile, according to at least one embodiment of the present disclosure, the electronic apparatus 100 may project an image onto a curved floor.

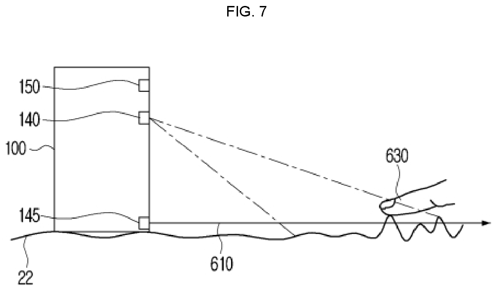

Here, as illustrated in FIG. 7, when a user touches a curved floor 22, light projected by the laser may not be reflected by the user hand. Accordingly, even when the user touches the floor, the electronic apparatus 100 may not detect the user touch input.

In this case, the electronic apparatus 100 of the present disclosure may detect the user touch input by changing a projection height or a projection angle at which the laser projects light.

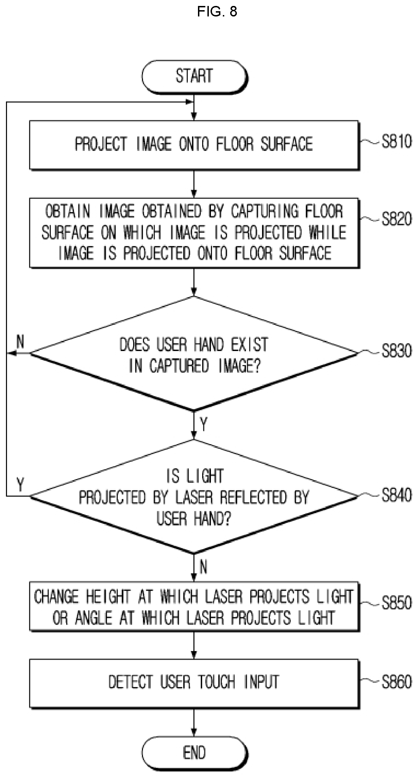

FIG. 8 is a flowchart illustrating a method in which the electronic apparatus 100 detects a user touch input by changing a projection height or a projection angle of a laser according to at least one embodiment of the present disclosure.

Referring to FIG. 8, the electronic apparatus 100 may project an image onto a floor surface (S810).

The electronic apparatus 100 may obtain an image obtained by capturing the floor surface on which the image is projected through the camera 150 while the image is projected onto the floor surface (S820).

The electronic apparatus 100 may identify whether a user hand exists in the image obtained by capturing the floor surface (S830).

According to at least one embodiment of the present disclosure, the memory 105 may store a neural network model trained to determine whether a user hand exists in an image when the image is input. Alternatively, the memory 105 may store a neural network model trained to determine whether a user hand touches one point of a floor in an image when the image is input.

Here, the electronic apparatus 100 may input the image captured through the camera 150 into the neural network model stored in the memory 105 and identify whether the user hand exists in the image obtained by capturing the projection surface (S830).

When the user hand does not exist in the image obtained by capturing the projection surface (S830-N), the electronic apparatus 100 may continuously perform an operation of projecting an image onto the floor (S810).

When the user hand exists in the image obtained by capturing the projection surface (S830-Y), the electronic apparatus 100 may identify whether light projected by the laser 145 is reflected by the user hand (S840).

When the light projected by the laser 145 is not reflected by a user body (S840-N), the electronic apparatus 100 may change a height at which the laser projects light or an angle at which the laser projects light (S850).

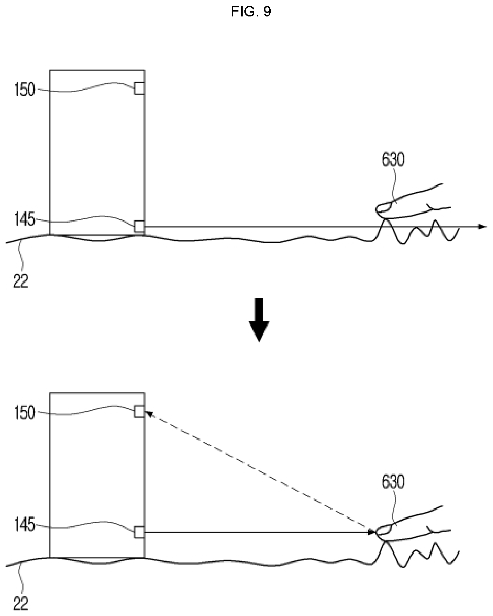

Specifically, as illustrated in FIG. 9, the electronic apparatus 100 may change the height at which the laser projects light. Accordingly, the light projected by the laser may be reflected by the user hand.

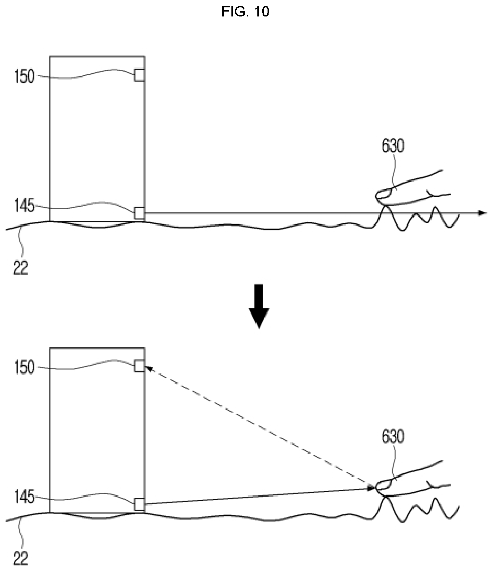

Alternatively, as illustrated in FIG. 10, the electronic apparatus 100 may increase an angle at which the laser projects light. Here, the angle at which the laser projects light may indicate an angle between a direction in which the laser projects light and the ground.

Accordingly, even when the user touches the curved floor surface, the light projected by the laser 145 may be reflected by the user hand.

When the height or angle at which the laser projects light is changed, the electronic apparatus 100 may detect the light reflected by the user hand through the camera 150.

The electronic apparatus 100 may detect the user touch input when the reflected light is detected through the camera 150 (S860). In addition, the electronic apparatus 100 may perform a function corresponding to a point touched by the user.

Meanwhile, the embodiments described above with respect to FIGS. 9 and 10 in S850 are not necessarily implemented only individually, and the electronic apparatus 100 may also change both the height at which the laser projects light and the angle at which the laser projects light.

According to at least one embodiment of the present disclosure, in S850, the electronic apparatus 100 may provide information for guiding a user to move a position of the electronic apparatus 100 to a flat surface or a surface having less curvature, without changing the height or angle at which the laser projects light.

For example, the electronic apparatus 100 may display text such as "A touch input is unable to be recognized because the floor surface is curved. Please move to a flat place." or may output a voice such as "A touch input is unable to be recognized because the floor surface is curved. Please move to a flat place."

Accordingly, when the position of the electronic apparatus 100 is changed, the electronic apparatus 100 may detect a user touch input through the laser 145 and the camera 150.

Meanwhile, in the above description, only a case in which the pitch angle of the electronic apparatus 100 changes is described. However, the electronic apparatus 100 may also differently project an image according to a roll angle change of the electronic apparatus 100.

Here, as described above, the roll angle may indicate an angle between the floor surface and a direction in which another surface 12 adjacent to one surface 11 including the projection unit 140 of the main body 10 faces.

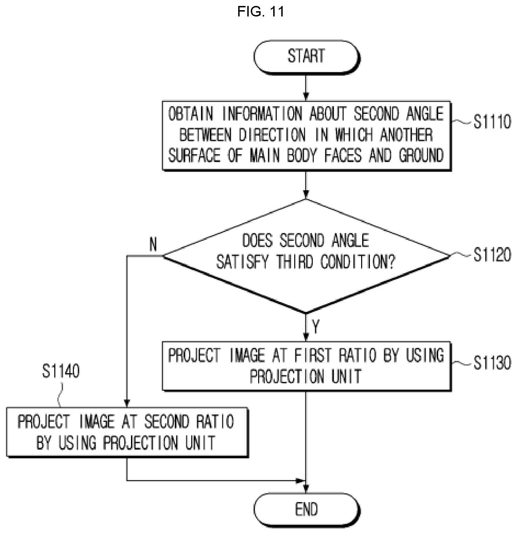

FIG. 11 is a flowchart illustrating a method in which the electronic apparatus projects an image according to a tilt change of the electronic apparatus according to at least one embodiment of the present disclosure.

Referring to FIG. 11, the electronic apparatus may obtain information about a second angle between another surface and the ground through the sensor 155 (S1110).

The electronic apparatus 100 may identify whether the second angle satisfies a third condition (S1120).

When the second angle satisfies the third condition (S1120-Y), the electronic apparatus 100 may project an image at a first ratio where a width of the image is greater than a height of the image by using the projection unit 140 (S1130).

Here, the third condition may be a condition in which the second angle is a specific angle or falls within a specific angle range. For example, the third condition may be a condition in which the second angle is 90 degrees.

Here, a projection surface on which the electronic apparatus 100 projects an image at the first ratio may be a floor or a wall surface. The electronic apparatus 100 may project an image at the first ratio onto a floor surface when the first angle satisfies the first condition. In addition, the electronic apparatus 100 may project an image at the first ratio onto a wall surface when the first angle satisfies the second condition
A state in which the electronic apparatus projects an image at the first ratio may be referred to as "landscape mode."

When the second angle does not satisfy the third condition and the second angle satisfies a fourth condition (S1120-N), the electronic apparatus 100 may project an image at a second ratio where a width of the image is less than a height of the image by using the projection unit 140 (S1140).

Here, the fourth condition may be a condition in which the second angle is a specific angle or falls within a specific angle range. For example, the fourth condition may be a condition in which the second angle is 0 degrees or 180 degrees.

Here, a projection surface on which the electronic apparatus 100 projects an image at the second ratio may be a floor or a wall surface. The electronic apparatus 100 may project an image at the second ratio onto a floor surface when the first angle satisfies the first condition. In addition, the electronic apparatus 100 may project an image at the second ratio onto a wall surface when the first angle satisfies the second condition.

A state in which the electronic apparatus projects an image at the second ratio may be referred to as "portrait mode."

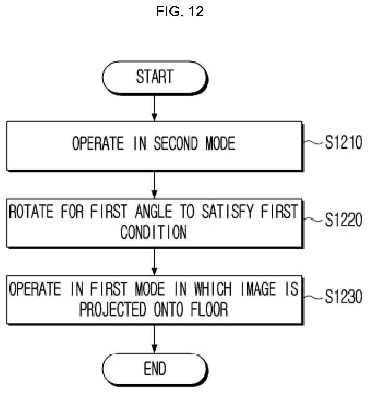

Meanwhile, according to at least one embodiment of the present disclosure, when a pitch angle change of the main body 10 is detected while the electronic apparatus 100 operates in the second mode in which an image is projected onto a wall surface, the electronic apparatus 100 may switch an operating mode to the first mode in which an image is projected onto the floor. This configuration will be described in detail with reference to FIG. 12.

FIG. 12 is a flowchart illustrating a method in which the electronic apparatus 100 controls an operating mode of the electronic apparatus according to a tilt change of the electronic apparatus 100 according to at least one embodiment of the present disclosure.

Referring to FIG. 12, the electronic apparatus 100 may operate in the second mode in which an image is projected onto a wall surface by using the projection unit 140 (S1210).

While the electronic apparatus 100 operates in the second mode, the electronic apparatus 100 may operate in the second input mode. Here, the second input mode may be a state in which the electronic apparatus 100 receives a user input for an image projected from an external device (e.g., a remote controller). In the present disclosure, the second input mode may be referred to as a "remote control input mode" or an "external device input mode."

Meanwhile, in the present disclosure, a type of an image projected onto a wall surface or a floor surface may correspond to an input mode of the electronic apparatus 100. When the input mode of the electronic apparatus 100 is the second input mode, the electronic apparatus 100 may also project a UI element indicating an activated item among a plurality of items. In addition, when the input mode of the electronic apparatus 100 is the first input mode in which a user input is received through a user touch input, the electronic apparatus 100 may project an image without a UI element indicating an activated item among the plurality of items.

Specifically, when the projected image is an image including a UI for selecting one of a plurality of items, and the input mode of the electronic apparatus 100 is the second input mode, the electronic apparatus 100 may also project a UI element indicating an activated item among the plurality of items. In the present disclosure, "activation" may be replaced with a term such as "focus."

Here, the UI element indicating the currently activated item may also display detailed information about the currently activated item.

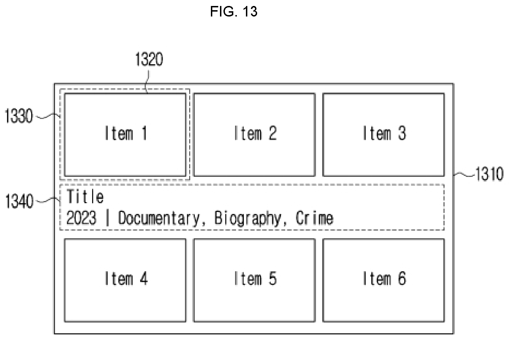

For example, as illustrated in FIG. 13, the electronic apparatus 100 may project an image 1310 displaying a UI element 1330 indicating a currently activated item 1320 among a plurality of items together. When the activated item 1320 is specific content, the electronic apparatus 100 may also project a UI element 1340 for displaying detailed information about the content such as a production year or genre of the specific content.

Here, when a user input for the projected image is detected, the electronic apparatus 100 may project an image corresponding to the obtained user input.

For example, when a corresponding user input such as up, down, left, or right is received while the image as illustrated in FIG. 13 is projected, the electronic apparatus 100 may change the activated item. In addition, when a user input such as confirmation or selection is received, the electronic apparatus 100 may project an image in which the activated item is selected. When the activated item is content, the electronic apparatus 100 may project a content playback image.

Meanwhile, the electronic apparatus 100 may rotate to change from a state in which the first angle satisfies the second condition to a state in which the first angle satisfies the first condition (S1220). Here, the electronic apparatus 100 may identify whether the first angle changes to a state satisfying the first condition through the sensor 155.

While an image is projected onto a wall surface, the electronic apparatus 100 may detect a tilt change of the electronic apparatus 100. Specifically, the electronic apparatus 100 may detect a change in the first angle between one surface of the main body 10 and the ground.

According to at least one embodiment of the present disclosure, while the electronic apparatus 100 rotates, the electronic apparatus 100 may perform an operation for changing a size of a projected image.

Specifically, the electronic apparatus 100 may project an image at a first size onto a wall surface when operating in the second mode, and may project an image at a second size onto a floor surface when operating in the first mode. Here, the first size may be greater than the second size.

According to at least one embodiment of the present disclosure, while the electronic apparatus 100 rotates or after rotation of the electronic apparatus 100 is completed, the electronic apparatus 100 may identify whether to switch an input mode of the electronic apparatus 100 from the second input mode to the first input mode.

Here, the first input mode may be a state in which the electronic apparatus 100 obtains a user input as a user touch input. In the present disclosure, the "first input mode" may be referred to as a "touch input mode."

Specifically, when movement of an external device is detected, the electronic apparatus 100 may maintain the second input mode. In addition, when movement of the external device is not detected, the electronic apparatus 100 may switch to the first input mode.

Alternatively, when a type of an image being projected satisfies a predetermined condition, the electronic apparatus 100 may maintain the second input mode. For example, when the type of the image being projected is content playback, the electronic apparatus 100 may maintain the second input mode.

Alternatively, when a user input is received from an external device, the electronic apparatus 100 may maintain the second input mode. When a user input is not received from the external device for a predetermined time or more, the electronic apparatus 100 may switch to the first input mode. Alternatively, when a user input for switching the input mode of the electronic apparatus 100 to the first input mode is detected from the external device, the electronic apparatus 100 may switch to the first input mode.

Alternatively, when the laser 145 or the camera 150 is not included in the electronic apparatus 100 or is not connected to the electronic apparatus 100, the electronic apparatus 100 may maintain the second input mode. When the laser 145 and the camera 150 are included in the electronic apparatus 100 or are connected to the electronic apparatus 100, the electronic apparatus 100 may switch to the first input mode.

Alternatively, when it is identified that a user hand exists in an image captured through the camera 150, the electronic apparatus 100 may switch to the first input mode. Here, the electronic apparatus 100 may identify whether the user hand exists by using the same method as the operation of S830.

According to at least one embodiment of the present disclosure, while the electronic apparatus 100 rotates, the electronic apparatus 100 may identify a projection surface for projecting an image on the floor.

While rotating, the electronic apparatus 100 may capture an image of a floor surface through the camera 150, and may identify a projection surface suitable for projecting an image on the floor surface.

The electronic apparatus 100 may continuously project an image from a wall surface to a floor surface while rotating. Alternatively, the electronic apparatus 100 may stop an operation of projecting an image while rotating, and may resume projection of the image when rotation of the electronic apparatus 100 is completed.

When rotation of the electronic apparatus 100 is completed, the electronic apparatus 100 may operate in the first mode in which an image is projected onto the floor (S1230). Here, the electronic apparatus 100 may project an image onto the identified projection surface of the floor.

The electronic apparatus 100 may project an image corresponding to the first input mode onto a floor surface when the input mode of the electronic apparatus 100 is the first input mode while operating in the first mode in which an image is projected onto the floor.

That is, when the input mode is switched from the second input mode to the first input mode, the electronic apparatus 100 may display an indication that the input mode is switched to the first input mode through the projected image.

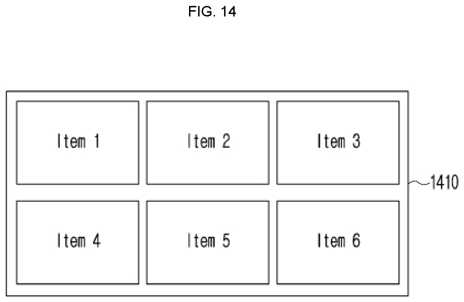

For example, when the input mode of the electronic apparatus 100 is the first input mode, the electronic apparatus 100 may project an image 1410 including a UI for selecting one of a plurality of items as illustrated in FIG. 14. Here, the electronic apparatus 100 may project the image by deleting the UI element for displaying the activated item described with reference to FIG. 13.

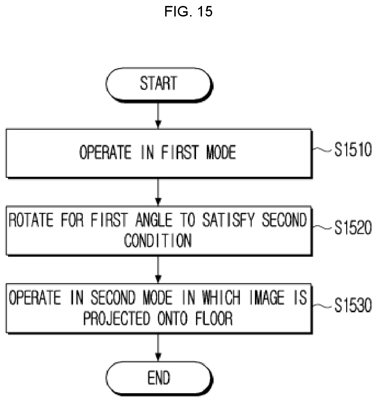

According to at least one embodiment of the present disclosure, when a pitch angle change of the main body 10 is detected while the electronic apparatus 100 operates in the first mode in which an image is projected onto the floor, the electronic apparatus 100 may switch an operating mode to the second mode in which an image is projected onto a wall surface. This configuration will be described in detail with reference to FIG. 15.

FIG. 15 is a flowchart illustrating a method in which the electronic apparatus 100 controls an operating mode of the electronic apparatus according to a tilt change of the electronic apparatus 100 according to at least one embodiment of the present disclosure.

Referring to FIG. 15, the electronic apparatus 100 may operate in the first mode in which an image is projected onto the floor by using the projection unit 140 (S1510).

While the electronic apparatus 100 operates in the first mode, the electronic apparatus 100 may operate in the first input mode. Here, the electronic apparatus 100 may project the image 1410 as described with reference to FIG. 14.

The electronic apparatus 100 may rotate to change from a state in which the first angle satisfies the first condition to a state in which the first angle satisfies the second condition (S1520).

Accordingly, the electronic apparatus 100 may operate in the second mode in which an image is projected onto the floor (S1530).

When rotation of the electronic apparatus 100 is completed to change the first angle to a state satisfying the second condition, the electronic apparatus 100 may switch the input mode from the first input mode to the second input mode. Here, the electronic apparatus 100 may deactivate the laser 145 and the camera 150 for detecting a user touch input.

In addition, when the input mode is switched from the first input mode to the second input mode, the electronic apparatus 100 may display an indication that the input mode is switched to the second input mode through the projected image.

For example, when the input mode of the electronic apparatus 100 is the first input mode, the electronic apparatus 100 may project the image 1310 including the UI for selecting one of a plurality of items as illustrated in FIG. 14. Here, the electronic apparatus 100 may project the image by adding the UI elements 1320 and 1330 for displaying the activated item as described with reference to FIG. 13.

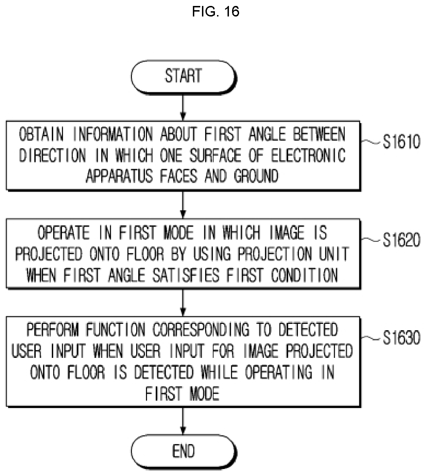

FIG. 16 is a view illustrating a control method for the electronic apparatus according to at least one embodiment of the present disclosure.

Referring to FIG. 16, the electronic apparatus 100 may obtain information about a first angle between a direction in which one surface of the electronic apparatus 100 faces and the ground (S1610).

The electronic apparatus 100 may operate in a first mode in which an image is projected onto the floor by using the projection unit 140 when the first angle satisfies a first condition (S1620).

The electronic apparatus 100 may perform a function corresponding to a detected user input when a user input for the image projected onto the floor is detected while operating in the first mode (S1630).

Specifically, the electronic apparatus 100 may project light toward the floor surface through a laser included in one surface while operating in the first mode. In addition, the electronic apparatus 100 may perform a function corresponding to an input position of the user input by detecting light reflected by a user body adjacent to the floor from the projected light through the camera included in one surface. In the present disclosure, the user body adjacent to the floor may indicate a user hand or a user finger.

Meanwhile, the electronic apparatus 100 may change a projection height of the laser when the light projected through the laser is not reflected by the user body adjacent to the floor while the user touches the floor. That is, the electronic apparatus 100 may change a projection height of the light projected by the laser.

Meanwhile, the electronic apparatus 100 may operate in the second mode in which an image is projected onto a wall surface by using the projection unit when the first angle satisfies the second condition.

The electronic apparatus 100 may change the image projected onto the wall surface and project the changed image onto the floor when the first angle satisfies the first condition while operating in the second mode.

Specifically, the electronic apparatus 100 may change a type and a size of the image projected onto the wall surface and project the changed image onto the floor when the first angle satisfies the first condition while operating in the second mode.

According to at least one embodiment of the present disclosure, the electronic apparatus 100 may project information corresponding to a selected item when a user input for selecting one of a plurality of items included in the image is detected.

According to at least one embodiment of the present disclosure, the electronic apparatus 100 may display detailed information for an activated item among a plurality of items included in the image while operating in the second mode.

Meanwhile, the electronic apparatus 100 may obtain information about a second angle between a direction in which another surface adjacent to one surface faces and the ground. Here, the electronic apparatus 100 may project an image onto the floor at a first ratio where a width of the image is greater than a height of the image by using the projection unit when the second angle satisfies a third condition. In addition, the electronic apparatus 100 may project an image onto the floor at a second ratio where a width of the image is less than a height of the image by using the projection unit when the second angle satisfies a fourth condition.

Although the various embodiments have been described above, the embodiments are not necessarily implemented only individually, and at least one embodiment may be implemented in one product by being entirely or partially combined with at least one other embodiment.

Meanwhile, a term "unit" or "module" used in the present disclosure may include a unit including hardware, software, or firmware, and may be interchangeably used with a term such as logic, a logic block, a part, or a circuit. The "unit" or "module" may be an integrally formed part, or may be a minimum unit performing one or more functions or a part thereof. For example, a module may be configured as an application-specific integrated circuit (ASIC).

The various embodiments of the present disclosure may be implemented as software including instructions stored in a machine-readable storage medium readable by a machine (e.g., a computer). The machine may call stored instructions from the storage medium, and may include the electronic apparatus 100 according to the disclosed embodiments as an apparatus operable according to the called instructions. When the instructions are executed by the processor, the processor may directly perform a function corresponding to the instructions or may perform the function corresponding to the instructions by using other components under control of the processor. The instructions may include code generated or executed by a compiler or an interpreter. The machine-readable storage medium may be provided in the form of a non-transitory storage medium. Here, "non-transitory" merely indicates that the storage medium does not include a signal and is tangible, and does not distinguish whether data is stored semi-permanently or temporarily in the storage medium.

According to at least one embodiment, the method according to the various embodiments disclosed in this document may be included in a computer program product and provided. The computer program product may be traded between a seller and a buyer as a product. The computer program product may be distributed in the form of a machine-readable storage medium (e.g., compact disc read only memory (CD-ROM)) or may be distributed online through an application store (e.g., Play Store^{™}). In the case of online distribution, at least a portion of the computer program product may be at least temporarily stored or temporarily generated in a storage medium such as the memory of a manufacturer server, an application store server, or a relay server.

Each of components (e.g., a module or a program) according to the various embodiments may include a single object or a plurality of objects, and some sub-components among the above-described corresponding sub-components may be omitted, or other sub-components may further be included in the various embodiments. Alternatively or additionally, some components (e.g., modules or programs) may be integrated into one object and perform the same or similar function performed by each corresponding component before integration. Operations performed by a module, a program, or another component according to the various embodiments may be executed in a sequential manner, a parallel manner, an iterative manner or a heuristic manner, or at least some operations may be executed in a different order, may be omitted, or another operation may be added.

## Claims

1. A control method for an electronic apparatus including a projection unit on one surface, the method comprising:
obtaining information about a first angle between a direction in which one surface of the electronic apparatus faces and the ground;
operating in a first mode in which an image is projected onto a floor by using the projection unit when the first angle satisfies a first condition; and
performing a function corresponding to a detected user input when the user input for the image projected onto the floor is detected while operating in the first mode.

2. The method as claimed in claim 1, wherein the performing of the function corresponding to the detected user input when the user input for the image projected onto the floor is detected while operating in the first mode includes:
projecting light toward the floor through a laser included in the one surface while operating in the first mode; and
performing a function corresponding to an input position of the user input by detecting light reflected by a user body adjacent to the floor from the projected light through a camera included in the one surface.

3. The method as claimed in claim 2, further comprising:
changing a projection height of the light projected through the laser when the light projected through the laser is not reflected by the user body adjacent to the floor.

4. The method as claimed in claim 1, further comprising:
operating in a second mode in which the image is projected onto a wall surface by using the projection unit when the first angle satisfies a second condition.

5. The method as claimed in claim 4, further comprising:
changing the image projected onto the wall surface and projecting the changed image onto the floor when the first angle satisfies the first condition while operating in the second mode.

6. The method as claimed in claim 1, wherein the performing of the function corresponding to the detected user input when the user input for the image projected onto the floor is detected while operating in the first mode includes:
projecting information corresponding to a selected item when a user input for selecting one of a plurality of items included in the image is detected.

7. The method as claimed in claim 1, further comprising:
displaying detailed information for an activated item among a plurality of items included in the image while operating in the second mode.

8. The method as claimed in claim 1, wherein the operating in the first mode in which the image is projected onto the floor by using the projection unit when the first angle satisfies the first condition includes:
obtaining information about a second angle between a direction in which another surface adjacent to the one surface faces and the ground,
projecting the image onto the floor at a first ratio where a width of the image is greater than a height of the image by using the projection unit when the second angle satisfies a third condition, and
projecting the image onto the floor at a second ratio where a width of the image is less than a height of the image by using the projection unit when the second angle satisfies a fourth condition.

9. An electronic apparatus comprising:
a main body;
a projection unit included in one surface of the main body;
a memory; and
a processor, wherein the processor is configured to:
obtain information about a first angle between a direction in which the one surface of the electronic apparatus faces and the ground;
operate in a first mode in which an image is projected onto a floor by using the projection unit when the first angle satisfies a first condition; and
perform a function corresponding to a detected user input when the user input for the image projected onto the floor is detected while operating in the first mode.

10. The apparatus as claimed in claim 9, further comprising:
a laser included in the one surface of the main body; and
a camera included in the one surface of the main body,
wherein the processor is configured to
project light toward the floor through the laser while operating in the first mode, and
perform a function corresponding to an input position of the user input by detecting light reflected by a user body adjacent to the floor from the projected light through the camera included in the one surface.

11. The apparatus as claimed in claim 10, wherein the processor is configured to:
change a projection height of the light projected through the laser when the light projected through the laser is not reflected by the user body adjacent to the floor.

12. The apparatus as claimed in claim 9, wherein the processor is configured to:
operate in a second mode in which the image is projected onto a wall surface by using the projection unit when the first angle satisfies a second condition.

13. The apparatus as claimed in claim 12, wherein the processor is configured to:
change the image projected onto the wall surface and project the changed image onto the floor when the first angle satisfies the first condition while operating in the second mode.

14. The apparatus as claimed in claim 9, wherein the processor is configured to:
project information corresponding to a selected item when a user input for selecting one of a plurality of items included in the image is detected.

15. The apparatus as claimed in claim 9, wherein the processor is configured to:
display detailed information for an activated item among a plurality of items included in the image while operating in the second mode.
